# EUROPÄISCHE PATENTSCHRIFT

(11) **EP 0 934 591 B1**
(45) Veröffentlichungstag und Bekanntmachung des Hinweises auf die Patenterteilung: **03.04.2002**
(21) Anmeldenummer: 97947702.3
(22) Anmeldetag: 21.10.1997
(51) Int. Cl.: G11B 33/12

(54) **BAUGRUPPE FÜR EIN AUFBAUSYSTEM**
SUB-ASSEMBLY FOR AN ASSEMBLY SYSTEM
ENSEMBLE D'ELEMENTS POUR SYSTEME DE MONTAGE

(30) Priorität: 22.10.1996 DE 19643613
(43) Veröffentlichungstag der Anmeldung: 11.08.1999
(73) Patentinhaber: Océ Printing Systems GmbH, 85586 Poing (DE)
(72) Erfinder: ENGST, Ernst, D-85716 Unterschlei heim (DE)
(74) Vertreter: Schaumburg, Thoenes, Thurn Patentanwälte
(86) Internationale Anmeldenummer: DE9702443
(87) Internationale Veröffentlichungsnummer: WO9818129

(56) Entgegenhaltungen:
- EP-A- 0 020 176
- EP-A- 0 069 545
- WO-A-90/06580
- US-A- 4 370 687
- US-A- 5 136 466
- US-A- 5 214 567
- US-A- 5 566 383

## Beschreibung

Die Erfindung betrifft eine Baugruppe für ein Aufbausystem mit einer minimalen Standard-Fronthöhe und einer minimalen Standard-Frontbreite, wobei die Baugruppe aus wenigstens zwei Abschnitten besteht, die eine gemeinsame Frontplatte und eine gemeinsame Trägerplatte haben, wobei die Fronthöhe und die Frontbreite jedes Abschnitts der minimalen Standard-Fronthöhe bzw. der minimalen Standard-Frontbreite entsprechen.

International genormte Aufbausysteme für elektrische Anlagen wie z.B. das zollige Aufbausystem ES902C der Firma Siemens oder ähnliche Systeme enthalten einen Baugruppenträger mit genormten Abmessungen, in den nebeneinander entsprechende Baugruppen eingeschoben werden können.

Eine solche Baugruppe enthält normalerweise eine Frontplatte und eine senkrecht mit der Frontplatte verbundene Hauptleiterplatte, auf der die elektrischen und elektronischen Komponenten der Baugruppe befestigt werden und die in standardisierte Führungsschienen im Baugruppenträger einschiebbar ist. Im folgenden wird unter einer Baugruppe nicht nur eine herkommliche Baugruppe mit einer oder mehreren Leiterplatten verstanden, sondern auch ein zum Aufbausystem passendes und darin einschiebbares Gestell zur Montage von elektrischen oder elektronischen Komponenten oder oder Geräten.

Die Höhe des Baugruppenträgers und der dazugehörigen Baugruppen von der Vorderseite aus gesehen ist allgemein ein ganzzahliges Vielfaches einer minimalen Standard-Fronthöhe, und die Breite einer Baugruppe ist ein ganzzahliges Vielfaches einer minimalen Standard-Frontbreite. Bei einem weit verbreiteten Typ von Aufbausystemen wird die Fronthöhe in Höheneinheiten angegeben, wobei eine Höheneinheit 44 mm beträgt und die minimale Standard-Fronthöhe drei Höheneinheiten oder 132 mm beträgt. Die Frontbreite wird in Teilungseinheiten angegeben, wobei eine Teilungseinheit 5,08 Millimeter beträgt und die Standard-Frontbreiten eine oder mehrere Teilungseinheiten betragen. Eine Standard-Frontbreite, die ungefähr der Dicke eines Plattenlaufwerks entspricht bzw. etwas größer ist, wird hier als minimale Standard-Frontbreite bezeichnet, obwohl sie bei anderen Anwendungen auch kleiner sein kann. Für handelsübliche Festplatten- oder Wechselplattenlaufwerke sind im allgemeinen acht Teilungseinheiten oder 40,64 mm ausreichend.

Eine einzelne Baugruppe mit einer einzelnen Frontplatte und einer einzelnen Hauptleiterplatte kann eine Breite von mehreren Standard-Frontbreiten haben. Ferner kann sie bei entsprechender Höhe des Baugruppenträgers eine Höhe von mehreren minimalen Standard-Fronthöhen haben, wobei die Hauptleiterplatte entsprechend größer auszulegen ist. Eine solche Baugruppe mit mehreren Standard-Frontbreiten und/oder mehreren minimalen Standard-Fronthöhen kann man sich als aus mehreren elementaren Abschnitten zusammengesetzt denken, die jeweils die Standard-Frontmaße haben und die vertikal bzw. horizontal aneinander angrenzen.

In manchen Fällen ist es wünschenswert, daß ein Gerät beispielsweise zur Steuerung einer elektrischen Anlage, das auf der Grundlage eines solchen Steuerungssystems realisiert wird, ein oder mehrere Plattenlaufwerke enthält, etwa ein Festplattenlaufwerk oder ein Wechselplattenlaufwerk wie ein Diskettenlaufwerk. Handelsübliche Plattenlaufwerke lassen sich jedoch nicht ohne weiteres in die genormten Aufbausysteme für elektrische Anlagen integrieren, so daß man ein solches Plattenlaufwerk bisher entweder außerhalb des Aufbausystems oder behelfsmäßig innerhalb des Aufbausystems montiert hat.

Aus der DE 93 05 271 U1 ist eine steckbare Peripheriebox bekannt, die ein Festplattenlaufwerk und ein Wechselplattenlaufwerk enthält. Die beiden Laufwerke sind im Abstand voneinander montiert. Der Zwischenraum zwischen den Laufwerken dient zur Aufnahme einer Anschlußvorrichtung, um die Laufwerke elektrisch mit einer Basisplatte zu verbinden.

In dem Katalog der Firma SCHROFF, Ausgabe 6/93, Seite 36, 20, sind Standard-Elektronikgehäuse beschrieben, welche Einschübe für Laufwerke haben. Die Laufwerke sind im Querformat angeordnet und haben jeweils eine Leiterplatte.

Die DE 88 12 270 U1 beschreibt ein Elektronikgehäuse zur Aufnahme von elektromechanischen Datenverarbeitungsmodulen. Die einzelnen Module sind mittels Führungsschienen in das Gehäuse einschiebbar.

Die US 5,214 567 beschreibt eine Baugruppe, die zwei Plattenlaufwerke enthält. Diese Plattenlaufwerke sind jeweils an einem Ende der Baugruppe einander gegenüberliegend montiert.

Aus der US-A-5,566,383 ist eine Baugruppe bekannt, bei der auf einer einzigen Trägerplatte zwei Plattenlaufwerke angeordnet sind, gemäß den Merkmalen des Oberbegriffes von Anspruch 1. Die Plattenlaufwerke können von der Frontplatte einen Abstand haben. Die Anschlußleitungen für die beiden Plattenlaufwerke sind am hinteren Ende der Trägerplatte angeordnet und zeigen in die gleiche Richtung.

Es ist Aufgabe der Erfindung, Plattenlaufwerke auf eine einfache, mechanisch stabile und platzsparende Weise in ein Aufbausystem zu integrieren.

Diese Aufgabe wird durch die Merkmale des Anspruchs 1 gelöst. Vorteilhafte Weiterbildungen sind in den weiteren Ansprüchen 2 bis 11 angegeben.

Die Erfindung beruht auf der Erkenntnis, daß es unökonomisch wäre, für jedes der beiden Plattenlaufwerke eine separate Baugruppe vorzusehen, wie nachfolgend erläutert wird.

Die Rückseite des Aufbausystems ist in der Regel durch eine Rückwandverdrahtungsplatine belegt, die z.B. einen Systembus oder Multibus zur Verbindung der Baugruppen miteinander enthält. Außerdem werden die Baugruppen von der Rückwand her mit Strom versorgt. Die Datenleitungen und Stromversorgungsleitungen eines handelsüblichen Plattenlaufwerks sind mit den Datenleitungen und Stromversorgungsleitungen des Aufbausystems im allgemeinen nicht kompatibel und müssen daher an der Vorderseite der Baugruppe herausgeführt werden. Zu diesem Zweck werden Steckverbinder bevorzugt, die in der Frontplatte befestigt sind.

Für ein einzelnes Wechselplattenlaufwerk würde man dann eine Baugruppe mit wenigstens zwei Abschnitten benötigen, d.h. eine Baugruppe mit wenigstens doppelter Höhe oder doppelter Breite. Für den Schacht zur Ein- und Ausgabe von Aufzeichnungsträgern wie z.B. Disketten wird auf der Frontseite der Baugruppe eine Fläche benötigt, die etwas weniger als einem Abschnitt entspricht. Die Daten- und Stromversorgungsanschlusse eines Wechselplattenlaufwerks befinden sich üblicherweise auf dessen Rückseite, und für entsprechende Steckverbinder in der Frontplatte der Baugruppe wird ein zweiter Abschnitt benötigt. Der Raum in der Baugruppe hinter den Steckverbindern bleibt dann im wesentlichen ungenutzt.

Zur Unterbringung eines einzelnen Festplattenlaufwerks, für das nur Steckverbinder in der Frontplatte erforderlich sind, genügt an sich zwar eine Baugruppe mit nur einem Abschnitt. Falls jedoch das Aufbausystem für ein Mehrfaches der minimalen Standard-Fronthöhe ausgelegt ist, etwa die doppelte oder dreifache Standard-Fronthöhe, muß eine passende Baugruppe ebenso hoch sein, so daß auch in diesem Fall Platz verschenkt wird.

Demgegenüber liefert ein bevorzugtes Ausführungsbeispiel der Erfindung eine Kombination aus wenigstens einem Wechselplattenlaufwerk und wenigstens einem Festplattenlaufwerk, wie sie in sehr vielen Anwendungsfällen ohnehin benötigt wird. Mit dieser Kombination kann der in der Baugruppe zur Verfügung stehende Raum optimal ausgenutzt werden, indem die Wechselplattenlaufwerks-Steckverbinder direkt neben den Festplattenlaufwerks-Steckverbindern in der Frontplatte befestigt werden, wobei alle externen Steckverbinder in einem Abschnitt der Baugruppe mit einem Festplattenlaufwerk liegen. Dadurch, daß die Plattenlaufwerke an der gemeinsamen Trägerplatte befestigt sind, die wiederum in Führungsschienen eines Baugruppenträgers geführt sein kann, ergibt sich ein mechanisch sehr stabiler Aufbau. Die vertikale Montage nach der Erfindung erlaubt eine optimale Platzausnutzung, da nur wenige Standard-Frontbreiten benötigt werden. Die nach außen geführten Steckverbinder erhöhen die Störsicherheit, insbesondere im Hinblick auf die elektromagnetische Verträglichkeit (EMV). Außerdem ermöglichen die Steckverbinder die einfache Zugänglichkeit zu den Laufwerken und die einfache Verbindungsmöglichkeit der Plattenlaufwerke mit der äußeren Umgebung.

Wenn die Baugruppe mit den Plattenlaufwerken in einem Baugruppentrager eingebaut ist, sind die Plattenlaufwerke je nach Abschirmvermögen des Baugruppenträgers störstrahlungsmäßig abgeschirmt bzw. verursachen keine Störungen in bezug auf die Umgebung. Eine metallische Trägerplatte, beispielsweise aus Aluminiumblech, sorgt für eine gewisse zusätzliche Abschirmung innerhalb des Baugruppenträgers. Die Trägerplatte kann aber auch aus Materialien wie z.B. Pertinax oder steifer Pappe bestehen.

Sämtliche Bedienungs- und Verbindungselemente der Plattenlaufwerke sind in die Frontplatte der Baugruppe integriert, so daß bei einem Einsatz der Baugruppe z.B. in einem Multibus-Aufbausystem oder ähnlichen Systemen keine Änderung der Rückwandverdrahtung erforderlich ist.

Die erfindungsgemäße Baugruppe verwendet weitgehend die üblichen Konstruktionsteile von Aufbausystemen und ist daher kostengünstig herstellbar. Am Aufbausystem selbst müssen keinerlei Änderungen oder Anpassungen vorgenommen werden. Die Erfindung ist für unterschiedliche Höhen-, Teilungs- und Tiefeneinheiten des Aufbausystems geeignet.

Vorteilhafte Weiterbildungen der Erfindung sind in den Unteransprüchen angegeben.

Im folgenden werden Ausführungsbeispiele der Erfindung anhand der Figuren erläutert. Darin zeigen
- Figur 1: eine Frontplatte für eine Baugruppe mit einem Wechselplattenlaufwerk und einem Festplattenlaufwerk,
- Figur 2: eine Ansicht der Frontplatte der vollständigen Baugruppe, und
- Figur 3: eine Seitenansicht der Baugruppe.

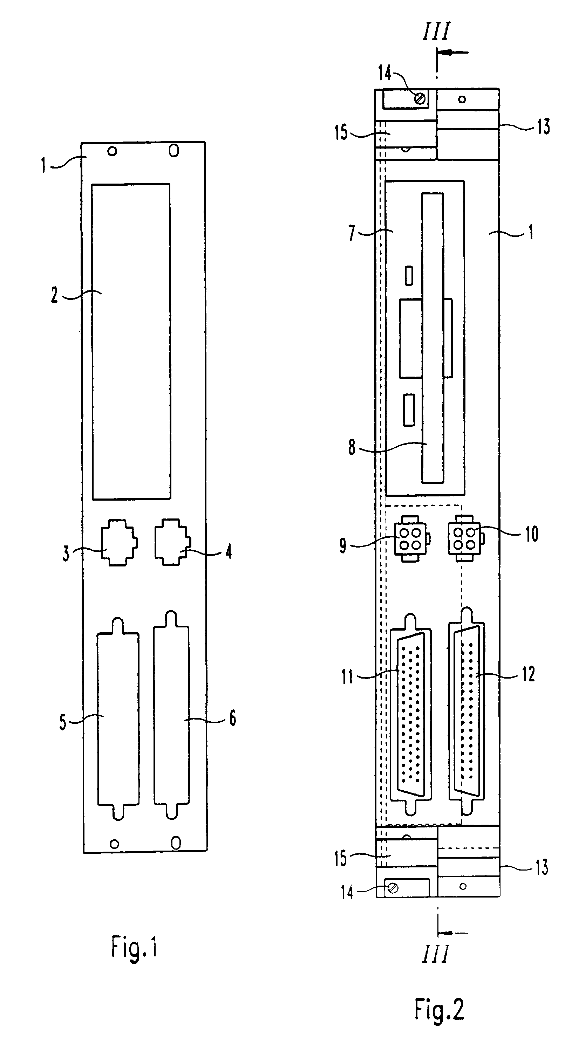

Fig. 1 zeigt eine rechteckige Frontplatte 1 mit einem rechteckigen Durchbruch 2 für ein Diskettenlaufwerk, zwei Durchbrüchen 3, 4 für Stromversorgungs-Steckverbinder und zwei Durchbrüchen 5, 6 für Datenleitungs-Steckverbinder.

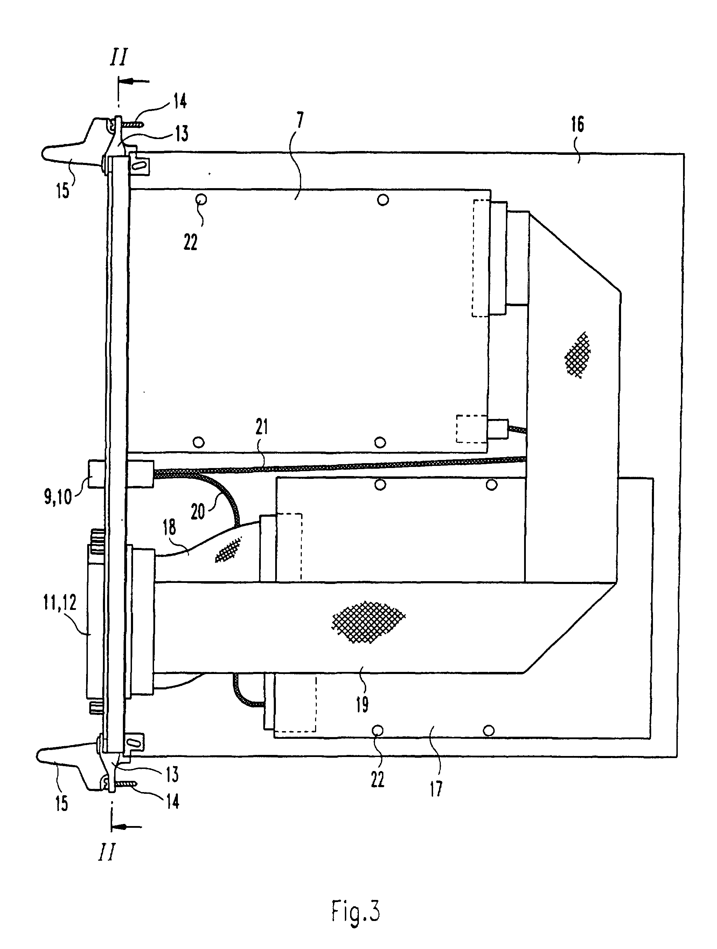

Fig. 2 zeigt eine Frontansicht einer Baugruppe mit eingebauten Laufwerken, von denen hier nur ein Diskettenlaufwerk 7 sichtbar ist, und zwar seine Vorderseite mit dem Diskettenschlitz 8. In den Durchbrüchen 3 bis 6 sind Stromversorgungs-Steckverbinder 9, 10 bzw. Datenleitungs-Steckverbinder 11, 12 befestigt. Am oberen und unteren Rand der Frontplatte 1 befinden sich nebeneinander je zwei Frontplattenhalter 13 zur Befestigung in einem nicht gezeigten Baugruppenträger mittels Befestigungsschrauben 14. An einem oberen bzw. unteren Frontplattenhalter 13 befindet sich jeweils ein Kniehebel 15, vgl. auch Fig. 3, mit deren Hilfe sich die Baugruppe leicht aus dem Baugruppenträger herausziehen läßt.

Wie in Fig. 3 gezeigt, erstreckt sich hinter der Frontplatte 1 und senkrecht dazu eine rechtwinklige Trägerplatte 16 aus Aluminium, die an der Frontplatte 1 befestigt ist. In der oberen Hälfte der Trägerplatte 16 bzw. in einem oberen Abschnitt der Baugruppe ist das Diskettenlaufwerk 7 untergebracht, und in der unteren Hälfte der Trägerplatte 16 bzw. in einem unteren Abschnitt der Baugruppe ist das Festplattenlaufwerk 17 untergebracht. In diesem unteren Abschnitt der Baugruppe liegen auch die Stromversorgungs-Steckverbinder 9, 10 und die Datenleitungs-Steckverbinder 11, 12.

Wie gezeigt, sind das Diskettenlaufwerk 7 und das Festplattenlaufwerk 17 gegeneinander versetzt montiert, wobei ihre geräteeigenen Daten- und Stromversorgungsanschlüsse in einander entgegengesetzte Richtungen weisen. Die Datenanschlüsse des Festplattenlaufwerks 17 sind zur Frontplatte 1 hin gerichtet und durch ein kurzes Flachbandkabel 18 mit dem gegenüberliegenden Datenleitungs-Steckverbinder 11 in der Frontplatte 1 verbunden. Die Datenanschlüsse des Diskettenlaufwerks 7 sind durch ein längeres Flachbandkabel 19 mit dem Datenleitungs-Steckverbinder 12 in der Frontplatte 1 verbunden. Das Flachbandkabel 19 kann sauber verlegt werden, z.B. auf der Seite des Festplattenlaufwerks 17 gegenüber der Trägerplatte 16, wie dargestellt, oder außen um das Festplattenlaufwerk 17 herum oder zwischen den beiden Laufwerken 7, 17 hindurch. Die Stromversorgungsanschlüsse des Diskettenlaufwerks 7 und des Festplattenlaufwerks 17 sind durch geeignet verlegte Stromversorgungsleitungen 20 und 21 mit den Stromversorgungs-Steckverbindern 9 bzw. 10 in der Frontplatte 1 verbunden.

Die Breite der Trägerplatte 16 in Fig. 3 (bzw. Tiefe, wenn von der Frontplatte 1 aus gesehen) entspricht der Standardtiefe von gebräuchlichen zölligen Baugruppenträgern. Die Hohe der Trägerplatte 16 entspricht einer Fronthöhe des Baugruppenträgers von 264 mm oder sechs Höheneinheiten, d.h. dem Doppelten der minimalen Standard-Fronthöhe. Beide Laufwerke 7, 17 sind mittels Schrauben 22 direkt an der Trägerplatte 16 festgeschraubt.

Wie man in Fig. 3 erkennt, bietet die Trägerplatte 16 durch die versetzte Anordnung der Laufwerke 7, 17 genügend, aber nicht übermäßig viel Platz für die verschiedenen Anschlüsse und Verbindungsleitungen, so daß der vorhändene Platz in der Baugruppe optimal ausgenutzt wird. Dennoch ist die Baugruppe konstruktiv sehr einfach aufgebaut und sind alle Komponenten gut zugänglich. Die Baugruppe ist außerdem ergonomisch, insbesondere wegen der intern verlegten Verbindungsleitungen.

In einem weiteren, in der Zeichnung nicht dargestellten Ausführungsbeispiel hat der verwendete Baugruppenträger eine Höhe von neun Höheneinheiten und ist die Trägerplatte entsprechend höher, so daß sie z.B. Platz für zwei Festplattenlaufwerke und ein Diskettenlaufwerk bietet, die in diesem Fall übereinander angeordnet werden.

In noch einem, ebenfalls nicht dargestellten und nicht unter den Anspruch 1 fallendem Beispiel hat der verwendete Baugruppenträger eine Höhe von drei Höheneinheiten und ist eine entsprechende Trägerplatte nur halb so hoch wie die Trägerplatte 16 in Fig. 3. In einem solchen Fall ist die Frontplatte doppelt so breit wie die Frontplatte 1 in Fig. 1 oder 2 zu wählen. Die Trägerplatte wird beispielsweise mittig an der Frontplatte befestigt, wobei auf jeder Seite der Trägerplatte je ein Laufwerk befestigt werden kann.

Die zuletzt beschrieben beiden Beispiele können auch miteinander kombiniert werden, so daß z.B. vier oder sechs Laufwerke platzsparend in einer Baugruppe untergebracht werden können. Aufgrund dieser Anpassungsfähigkeit kann eine platzsparende Baugruppe mit zwei oder mehr Plattenlaufwerken vielfach auch in Aufbausystemen hergestellt werden, die auf anderen Grundmaßen basieren als das beschriebene zöllige Aufbausystem.

### Bezugszeichenliste

- 1: Frontplatte
- 2: Durchbruch Diskettenlaufwerk
- 3, 4: Durchbrüche für Stromversorgungs-Steckverbinder
- 5, 6: Durchbrüche für Datenleitungs-Steckverbinder
- 7: Diskettenlaufwerk
- 8: Diskettenschlitz
- 9, 10: Stromversorgungs-Steckverbinder
- 11, 12: Datenleitungs-Steckverbinder
- 13: Frontplattenhalter
- 14: Befestigungsschrauben
- 15: Kniehebel
- 16: Trägerplatte
- 17: Festplattenlaufwerk
- 18, 19: Flachbandkabel
- 20, 21: Stromversorgungsleitungen
- 22: Schrauben

## Patentansprüche

1. Baugruppe für ein Aufbausystem, mit wenigstens zwei Abschnitten, die eine gemeinsame Frontplatte (1) und eine gemeinsame Trägerplatte (16) haben, wobei die Fronthöhe und die Frontbreite eines jeden Abschnitts mindestens gleich einer minimalen Standard-Fronthöhe bzw. einer minimalen Standard-Frontbreite ist, wobei in jedem der Abschnitte ein Plattenlaufwerk (7, 17) untergebracht ist, die Plattenlaufwerke (7, 17) jeweils flach auf der vertikal angeordneten gemeinsamen Trägerplatte (16) montiert sind, und wobei mindestens eines der beiden Plattenlaufwerke (17) von der Frontplatte (1) beabstandet ist, **dadurch gekennzeichnet, daß** die Plattenlaufwerke (7, 17) in Richtung der Tiefe der Baugruppe gesehen gegeneinander versetzt sind, so daß zwischen Innenseite der Frontplatte (1) und der ihr zugewandten Rückseite des versetzt angeordneten und von der Frontplatte beabstandeten Plattenlaufwerks (17) ein Raum geschaffen ist, in welchen Anschlußleitungen (18, 19; 20, 21) sowchl für das erste Plattenlaufwerk (17) als auch für das zweite Plattenlaufwerk (7) angeordnet sind, wobei die von den Plattenlaufwerken (7, 17) abgehenden Anschlußleitungen in einander entgegengesetzte Richtungen weisen, und daß die Anschlußleitungen (18, 19; 20, 21) zu Steckverbindern (9, 10; 11, 12) geführt sind, die in der dem versetzt angeordneten Plattenlaufwerk (17) zugewandten Teil der Frontplatte (1) befestigt sind.

2. Baugruppe nach Anspruch 1, **dadurch gekennzeichnet, daß** wenigstens eines der Plattenlaufwerke ein Wechselplattenlaufwerk (7) und wenigstens eines ein Festplattenlaufwerk (17) ist.

3. Baugruppe nach Anspruch 1 oder 2, **dadurch gekennzeichnet, daß** in jedem Abschnitt der Baugruppe, in dem ein Wechselplattenlaufwerk (7) untergebracht ist, ein Durchbruch (2) zum Wechseln eines Aufzeichnungsträgers für das Wechselplattenlaufwerk in der Frontplatte (1) gebildet ist, daß für jedes Laufwerk wenigstens ein Steckverbinder (9, 10, 11, 12) für eine externe Verbindung vorgesehen ist und daß die Steckverbinder in dem Abschnitt oder den Abschnitten der Baugruppe, in dem bzw. in denen jeweils ein Festplattenlaufwerk (17) untergebracht ist, in der Frontplatte (1) befestigt sind.

4. Baugruppe nach einem der vorhergehenden Ansprüche, **dadurch gekennzeichnet, daß** die Steckverbinder Stromversorgungs-Steckverbinder (9, 10) und/oder Datenleitungs-Steckverbinder (11, 12) sind.

5. Baugruppe nach einem der vorhergehenden Ansprüche, **dadurch gekennzeichnet, daß** sie aus zwei Abschnitten besteht, in denen jeweils ein Wechselplattenlaufwerk (7) und ein Festplattenlaufwerk (17) angeordnet ist.

6. Baugruppe nach Anspruch 5, **dadurch gekennzeichnet, daß** die Fronthöhe der Baugruppe dem Doppelten der minimalen Standard-Fronthöhe entspricht, daß die Frontbreite der Baugruppe der minimalen Standard-Frontbreite entspricht und daß das Wechselplattenlaufwerk (7) und das Festplattenlaufwerk (17) auf einer Seite der Trägerplatte (16) an der Trägerplatte befestigt sind.

7. Baugruppe nach Anspruch 5, **dadurch gekennzeichnet, daß** die Fronthöhe der Baugruppe der minimalen Standard-Fronthöhe entspricht, daß die Frontbreite der Baugruppe dem Doppelten der minimalen Standard-Frontbreite entspricht und daß das Wechselplattenlaufwerk (7) und das Festplattenlaufwerk (17) auf einander entgegengesetzten Seiten der Trägerplatte (16) an der Trägerplatte befestigt sind.

8. Baugruppe nach einem der vorhergehenden Ansprüche, **dadurch gekennzeichnet, daß** die Trägerplatte (16) für eine Aufnahme in Standard-Führungsschienen in einem Baugruppenträger des Aufbausystems eingerichtet ist.

9. Baugruppe nach Anspruch 8, **dadurch gekennzeichnet, daß** die Trägerplatte eine Metallplatte (16) ist.

10. Baugruppe nach einem der vorhergehenden Ansprüche, **dadurch gekennzeichnet, daß** die minimale Standard-Fronthöhe ungefähr 132 mm ist und daß die minimale Standard-Frontbreite ungefähr 40,64 mm ist.

11. Baugruppe nach einem der vorhergehenden Ansprüche, **dadurch gekennzeichnet, daß** das Wechselplattenlaufwerk oder wenigstens eines der Wechselplattenlaufwerke ein Diskettenlaufwerk (7) ist.

## Claims

1. Assembly for a building block system with at least two sections that have a common front panel (1) and a common carrier plate (16), with the front height and the front width of each and every section being at least equal to a minimal standard front height and a minimal standard front width, respectively, a disk drive (7, 17) being accommodated in each of the sections, the disk drives (7, 17) being respectively mounted flat on the vertically arranged, common carrier plate (16), and at least one of the two disk drives (17) being spaced from the front panel (1), **characterized in that** the disk drives (7, 17) are arranged offset relative to one another as seen in the direction of the depth of the assembly, so that a space is created between the inside of the front panel (1) and the backside of the disk drive (17) facing toward it and being arranged offset and spaced from the front panel, in which space connecting lines (18, 19; 20, 21) both for the first disk drive (17) as well as for the second disk drive (7) are arranged, the connecting lines outgoing from the disk drives (7, 17) pointing in opposite directions, and **in that** the connecting lines (18, 19; 20, 21) are conducted to plug-type connectors (9, 10; 11, 12) that are secured **in that** part of the front panel (1) facing toward the disk drive (17) arranged offset.

2. Assembly according to claim 1, **characterized in that** at least one of the disk drives is a moving head disk drive (7) and at least one is a hard disk drive (17).

3. Assembly according to claim 1 or 2, **characterized in that** a clearance (2) for changing a recording medium for the moving head disk drive is formed in the front panel (1) in each section of the assembly in which a moving head disk drive (7) is accommodated, **in that** at least one plug-type connector (9, 10, 11, 12) for an external connection is provided for each disk drive, and **in that** the plug-type connectors are secured in the front panel (1) in the section or the sections of the assembly in which a hard disk drive (17) is respectively accommodated.

4. Assembly according to one of the preceding claims, **characterized in that** the plug-type connectors are power supply plug-type connectors (9, 10) and/or data line plug-type connectors (11, 12).

5. Assembly according to one of the preceding claims, **characterized in that** it is composed of two sections in which a moving head disk drive (7) and a hard disk drive (17) is respectively arranged.

6. Assembly according to claim 5, **characterized in that** the front height of the assembly corresponds to twice the minimal standard front height, **in that** the front width of the assembly corresponds to the minimal standard front width, and **in that** the moving head disk drive (7) and the hard disk drive (17) are secured to the carrier plate at one side of the carrier plate (16).

7. Assembly according to claim 5, **characterized in that** the front height of the assembly corresponds to the minimal standard front height, **in that** the front width of the assembly corresponds to twice the minimal standard front width, and **in that** the moving head disk drive (7) and the hard disk drive (17) are secured to the carrier plate at mutually opposite sides of the carrier plate (16).

8. Assembly according to one of the preceding claims, **characterized in that** the carrier plate (16) is configured for an acceptance in standard guide rails in an assembly carrier of the building block system.

9. Assembly according to claim 8, **characterized in that** the carrier plate is a metal plate (16).

10. Assembly according to one of the preceding claims, **characterized in that** the minimal standard front height is approximately 132 mm, and **in that** the minimal standard front width is approximately 40.64 mm.

11. Assembly according to one of the preceding claims, **characterized in that** the moving head disk drive or at least one of the moving head disk drives is a diskette drive (7).

## Revendications

1. Module pour un système de montage, comportant au moins deux sections qui possèdent une plaque avant commune (1) et une plaque de support commune (16), dans lequel la hauteur avant et la largeur avant de chaque section sont au moins égales respectivement à une hauteur avant minimale standard et une largeur avant minimale standard, dans lequel un lecteur de disques (7,17) est introduit dans chacune des sections, chacun des lecteurs de disques (7,17) étant monté à plat sur la plaque de support commune (16) agencée verticalement, et dans lequel au moins un des deux lecteurs de disques (17) se trouve à distance de la plaque avant (1), **caractérisé en ce que** les lecteurs de disques (7,17) sont décalés l'un par rapport à l'autre dans le sens de la profondeur du module, de sorte qu'un espace est créé entre la face intérieure de la plaque avant (1) et la face arrière, dirigée vers ladite face intérieure, du lecteur de disques (17) agencé de façon décalée et à distance de la plaque avant, espace dans lequel sont agencées des lignes de connexion (18, 19 ; 20, 21) destinées aussi bien au premier lecteur de disques (17) qu'au deuxième lecteur de disques (7), les lignes de connexion qui partent des lecteurs de disques (7, 17) étant dirigées dans des directions opposées, et **en ce que** les lignes de connexion (18, 19 ; 20, 21) sont amenées à des connecteurs (9, 10 ; 11, 12) qui sont fixés dans la partie de la plaque avant (1) qui est dirigée vers le lecteur de disques (17) agencé de façon décalée.

2. Module selon la revendication 1, **caractérisé en ce qu'**au moins un des lecteurs de disques est un lecteur de disques amovibles (7), et au moins un des lecteurs de disques est un lecteur de disques durs (17).

3. Module selon la revendication 1 ou 2, **caractérisé en ce que** dans chaque section du module, dans laquelle est introduit un lecteur de disques amovibles (7), une ouverture (2) est ménagée dans la plaque avant (1) pour remplacer un support d'information pour le lecteur de disques amovibles **en ce qu'**il est prévu pour chaque lecteur au moins un connecteur (9, 10, 11, 12) destiné à une connexion externe, et **en ce que** les connecteurs dans la ou les sections du module, dans laquelle ou dans chacune desquelles est introduit un lecteur de disques durs (17), sont fixés dans la plaque avant (1).

4. Module selon l'une des revendications précédentes, **caractérisé en ce que** les connecteurs sont des connecteurs d'alimentation (9, 10) et/ou des connecteurs de lignes de données (11, 12).

5. Module selon l'une des revendications précédentes, **caractérisé en ce qu'**il est constitué de deux sections dans chacune desquelles sont agencés un lecteur de disques amovibles (7) et un lecteur de disques durs (17).

6. Module selon la revendication 5, **caractérisé en ce que** la hauteur avant du module correspond au double de la hauteur avant minimale standard, **en ce que** la largeur avant du module correspond à la largeur avant minimale standard, et **en ce que** le lecteur de disques amovibles (7) et le lecteur de disques durs (17) d'un côté de la plaque de support (16) sont fixés à la plaque de support.

7. Module selon la revendication 5, **caractérisé en ce que** la hauteur avant du module correspond à la hauteur avant minimale standard, **en ce que** la largeur avant du module correspond au double de la largeur avant minimale standard, et **en ce que** le lecteur de disques amovibles (7) et le lecteur de disques durs (17) sur des côtés opposés de la plaque de support (16) sont fixés à la plaque de support.

8. Module selon l'une des revendications précédentes, **caractérisé en ce que** la plaque de support (16), destinée à être reçue dans des glissières de guidage standard, est placée dans un support de module du système de montage.

9. Module selon la revendication 8, **caractérisé en ce que** la plaque de support est une plaque métallique (16).

10. Module selon l'une des revendications précédentes, **caractérisé en ce que** la hauteur avant minimale est d'environ 132 mm, et **en ce que** la largeur minimale standard est d'environ 40,64 mm.

11. Module selon l'une des revendications précédentes, **caractérisé en ce que** le lecteur de disques amovibles ou au moins l'un des lecteurs de disques amovibles est un lecteur de disquettes (7).
